# EUROPEAN PATENT SPECIFICATION

(11) **EP 3 472 020 B1**
(45) Date of publication and mention of the grant of the patent: **20.05.2020**
(21) Application number: 17733397.8
(22) Date of filing: 16.06.2017
(51) Int. Cl.: B61F 1/02, B61F 1/08, B61F 3/04, H02K 9/04

(54) **DUCTING FOR A TRACTION MOTOR COOLING SYSTEM OF A RAIL VEHICLE, TRACTION MOTOR COOLING SYSTEM AND RAIL VEHICLE**
KANAL FÜR EIN TRAKTIONSMOTORKÜHLSYSTEM EINES SCHIENENFAHRZEUGS, TRAKTIONSMOTORKÜHLSYSTEM UND SCHIENENFAHRZEUG
CANALISATION DESTINÉE À UN SYSTÈME DE REFROIDISSEMENT DE MOTEUR DE TRACTION D'UN VÉHICULE FERROVIAIRE, SYSTÈME DE REFROIDISSEMENT DE MOTEUR DE TRACTION ET VÉHICULE FERROVIAIRE

(30) Priority: 17.06.2016 GB 201610557
(43) Date of publication of application: 24.04.2019
(73) Proprietor: Bombardier Transportation GmbH, 10785 Berlin (DE)
(72) Inventor: EDWARDS, Jonathan, Derby Derbyshire (GB); ROE, Mick, Derby Derbyshire (GB)
(74) Representative: Alatis
(86) International application number: PCT/EP2017/064812
(87) International publication number: WO 2017/216364

(56) References cited:
- CN-A- 104 539 103
- JP-A- H07 237 457
- JP-A- S62 238 160
- US-A- 1 795 266
- US-A- 2 076 231

## Description

### TECHNICAL FIELD OF THE INVENTION

The present invention relates to a ducting for a traction motor cooling system of a rail vehicle, as well as to the associated cooling system and rail vehicle.

### BACKGROUND ART

A ducting for a traction motor cooling system of a rail vehicle is disclosed in CN201400171U. To meet the space requirement, the ducting comprises a common air inlet and multiple air outlets. The common air inlet is formed at a connecting part of the front end of a plurality of branch ducts; and an air outlet is respectively arranged at the tail end of each branch duct. Flow guide plates are arranged inside each branch duct for guiding the air and reducing flow resistance. The ducting arrangement is not optimised in terms of width.

A traction motor cooling system of a rail vehicle is disclosed in CN104539103. The system comprises a cooling air unit and two main air ducts running in parallel at a distance from one another. The air inlets of the two main air ducts are connected each with one of the two air outlets of the cooling air unit, and the air outlets of the two main air ducts are communicated with air inlets of two traction motors of a vehicle body bogie, respectively. The main air ducts providing air for the two traction motors independent of each other and system resistance is reduced. Unbalanced air distribution is avoided and the cooling efficiency is improved. However, this system requires a substantial space in particular in the region in which the two main ducts run in parallel. US2076231 describes an electric locomotive bed frame with communicating cooling ducts.

### SUMMARY OF THE INVENTION

The invention aims to provide a more compact ducting arrangement for a traction motor cooling system of a rail vehicle.

According to a first aspect of the invention, there is provided a rail vehicle as claimed in claim 1.

This arrangement is particularly compact in terms of width and does reduce the pivoting angle of the running gear.

According to various embodiments:
- The first duct is shorter than the second duct.
- The first duct outlet is located between the two parallel branches.
- The first duct inlet and the second duct inlet are spaced apart from one another.
- The first duct inlet and the second duct inlet are located in a common plane.
- The first duct outlet the second duct outlet lie on a straight line perpendicular to the common plane.
- The second duct comprises an outlet branch connected between the two parallel branches and the second duct outlet.
- The first duct outlet the second duct outlet are in a common plane.

The walls of the first duct and second duct can be made of sheet metal, e.g. stamped aluminium, plastics or of a composite material, e.g. glass reinforced plastics. According to an embodiment, the ducting comprises a one-piece cover comprising a first wall section forming a first inner wall surface of the first duct and a second inner wall surface of the second duct, the first inner wall surface and the second inner wall surface facing a common direction. The ducting may also comprise a partition wall common to the first duct and the second duct.

Preferably, the first fan has a first fan inlet, the second fan has a second fan inlet, the first and second fan inlets being separate. Thus, the two cooling circuits are pneumatically independent.

According to an embodiment, the fan unit comprises a single motor for driving the first fan and the second fan. The motor can be a through shaft motor placed between the first and second fans.

According to another aspect of the invention, there is provided a rail vehicle comprising a running gear comprising a first wheel set, a second wheel set, a first traction motor for driving the first wheel set, a second traction motor for driving the second wheel set, the first traction motor being provided with a first cooling inlet, the second traction motor being provided with a second cooling inlet, wherein the rail vehicle comprises the traction motor cooling system as described hereinbefore, wherein the first duct outlet is connected to the first cooling inlet and the second duct outlet is connected to the second cooling inlet.

Preferably the first duct outlet is connected to the first cooling inlet by means of a first vertical flexible sleeve and the second duct outlet is connected to the second cooling inlet by means of a second vertical flexible sleeve. The vertical sleeves accommodate the movements between the running gear and the vehicle body of the rail vehicle.

According to various embodiments:
- The first cooling inlet and the second cooling inlet are aligned on a longitudinal axis of the rail vehicle.
- The running gear is provided with two secondary suspension elements located on two lateral sides of the running gear in a median transverse vertical plane of the running gear, the first cooling inlet and the second cooling inlet being located on opposite sides of the median transverse vertical plane of the running gear.
- The ducting is fixed to an underframe of a vehicle body of the rail vehicle.
- The fan unit is fixed to an underframe of a vehicle body of the rail vehicle.
- The outlet branch is received in a channel element of an underframe of the rail vehicle.

### BRIEF DESCRIPTION OF THE FIGURES

Other advantages and features of the invention will then become more clearly apparent from the following description of a specific embodiment of the invention given as non-restrictive examples only and represented in the accompanying drawings in which:
- Figure 1 is an isometric view of a traction motor cooling system suspended to an underframe of a vehicle body of a rail vehicle, including a ducting of the cooling system;
- Figure 2 is an isometric view similar to the view of figure 1, but without the ducting;
- Figure 3 is a top view of the components of the traction motor cooling system shown in figure 2;
- Figure 4 is an isometric view of an upper part of the ducting of figure 1;
- Figure 5 is an isometric view of a lower part of the ducting of figure 1;
- Figure 6 is a side view of the ducting of figure 1;
- Figure 7 is a top view of the ducting of figure 1;
- Figure 8 is a cross-section through line E-E of figure 7;
- Figure 9 is a cross-section through line D-D of figure 7;
- Figure 10 is a cross-section through line C-C of figure 7;
- Figure 11 is a cross-section through line B-B of figure 7.

Corresponding reference numerals refer to the same or corresponding parts in each of the figures.

### DETAILED DESCRIPTION OF A PREFERRED EMBODIMENT

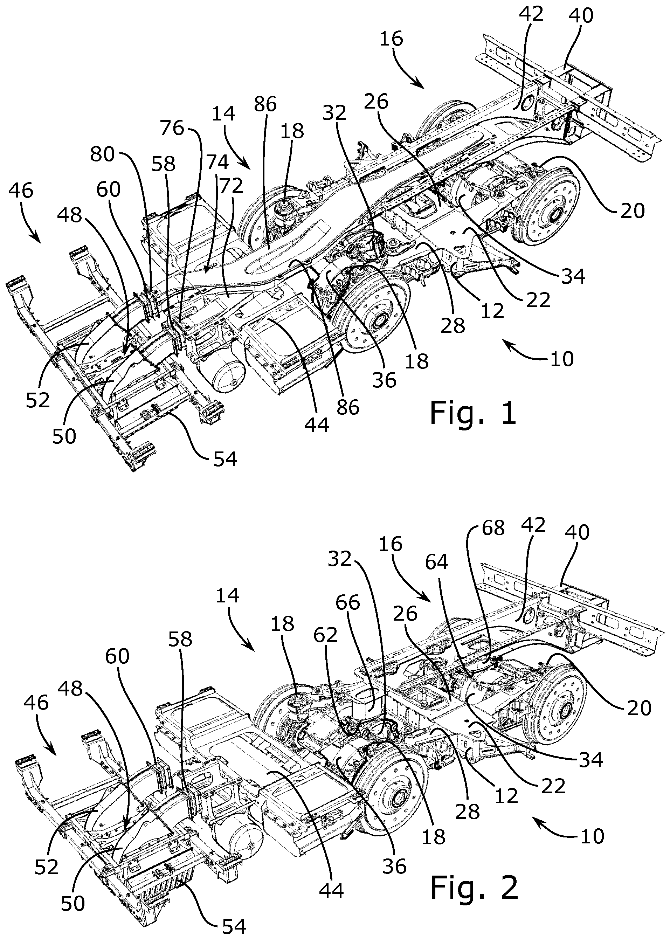

With reference to figures **1** to **3****,** a running gear **10,** more specifically a bogie, of a rail vehicle, comprises a H-shaped running gear frame **12** supported on a pair of front and rear wheel sets **14, 16** by means of a primary suspension **18, 20.** The front wheel set **14** and the rear wheel set **16** are located respectively on a front side and a rear side of a median transverse vertical plane **P1** of the running gear **10.** The running gear frame **12** is provided with a planar horizontal surface **22, 24** on each side of a median longitudinal vertical plane **P2** of the running gear **10,** in a region of connection of a transom **26** and of one of the longitudinal beams **28, 30** of the running gear frame **12,** for supporting a secondary suspension unit (not shown). The running gear is provided with two traction units **32, 34** located on opposite sides of the median transverse vertical plane **P1,** each for powering one of the wheel sets **14, 16.** Each wheel set **14, 16** is provided with a brake unit **36, 38.**

In figures **1** to **3****,** only parts of an underframe of the vehicle body of the rail vehicle have been illustrated, in particular a T-shaped bolster subassembly **40** provided with a longitudinal channel member **42** that extends in the longitudinal direction of the vehicle from one end of the running gear towards the median transverse vertical plane **P1** of the running gear **10,** on top of and at a distance from the running gear **10.** A compressed air tank **44** is fixed to another part of the underframe at the opposite end of the running gear **10.** A cooling unit **46** is also fixed to the underframe of the vehicle body farther away from the running gear **10.** The compressed air tank is located between the running gear **10** and the cooling unit **46.** The cooling unit **46** comprises a central trough-shaft motor **48,** which drives two independent fans **50, 52,** one at each end of the motor **48.** Each fan **50, 52** has a fan inlet **54, 56** and a fan outlet **58, 60.** The two fan outlets **58, 60** are located in a common vertical transverse plane and on each side of a median vertical longitudinal plane of the vehicle body, which is identical with the median vertical longitudinal plane **P2** of the running gear in a nominal position of the rail vehicle.

Each traction unit **32, 34** is provided with a cooling inlet **62, 64** facing up and connected to a vertically extending flexible sleeve **66, 68** illustrated in Figure **2****.** One of the flexible sleeves **68** opens into an opening of the longitudinal channel member **42** of the bolster subassembly **40.** The two cooling inlets **62, 64** are substantially aligned in the median longitudinal vertical plane **P2** of the running gear **10.**

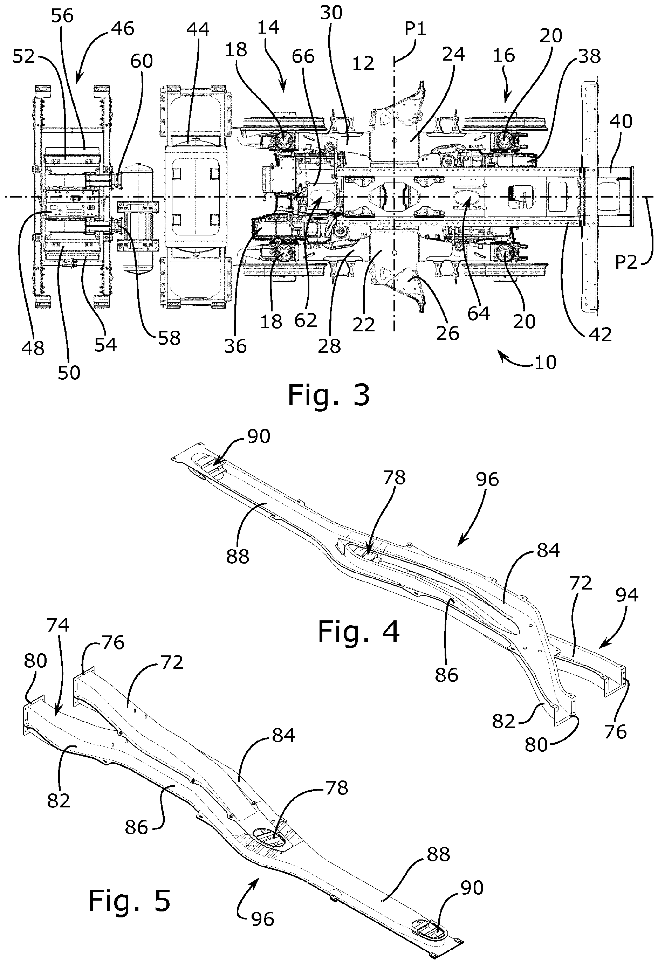

A ducting **70,** shown in figure **1** and left out in figures **2** and **3****,** is fixed to the underframe of the vehicle and comprises a first duct **72** for connecting the fan outlet **58** to the closest cooling inlet **62** and a second duct **74** for connecting the second fan outlet **60** to the farthest of the cooling inlets **64.** The two ducts **72, 74** are pneumatically independent from one another.

The first duct **72** comprises an inlet **76** connected to the fan outlet **58,** an outlet **78** connected to the flexible sleeve **66** and the cooling inlet **62** and a single flow path between the inlet **76** and outlet **78.** The second duct **74** comprises an inlet **80** connected to the second fan outlet **60** and a main inlet branch **82** which extends from the inlet **80** to a fork at which the second duct is divided in two parallel branches **84, 86** that pass on each side of a portion of the first duct **72** before rejoining downstream from the outlet **78** of the first duct **72** into a single outlet branch **88** that is received within the channel member **42** of the bolster subassembly **40,** and with an outlet **90** connected to the flexible sleeve **68** and the second cooling inlet **64.** The inlet **76** of the first duct **72** and the inlet **80** of the second duct **74** lie in a common vertical plane **P3.** The outlet **78** of the first duct **72** and the outlet **90** of the second duct lie in a common horizontal plane **P4** and on straight line **X,** which is perpendicular to the plane **P3** of the inlets **76, 80** and lies in a median vertical longitudinal plane of the vehicle body, which is identical with the median vertical longitudinal plane **P2** of the running gear **10** in a nominal position of the rail vehicle. The portion of the first duct **72** located between the two parallel branches **84, 86** includes the outlet **78** of the first duct **72.**

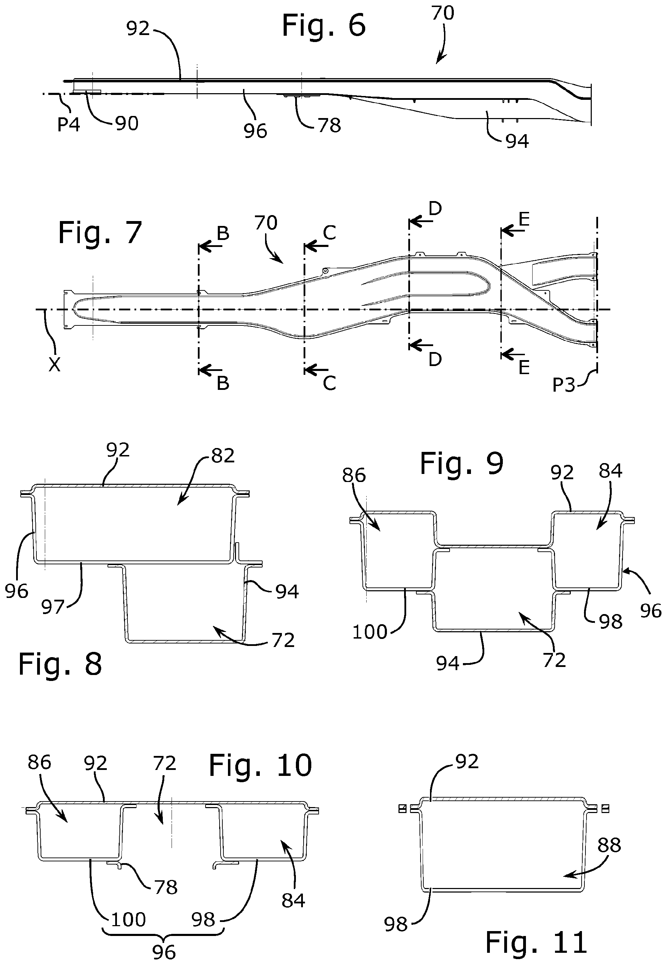

The ducting **70** is made of glass reinforced plastic plates that are moulded and bonded together. As shown in figures **6** to **11****,** the ducting comprises a cover **92,** an inner lower part **94** and an outer lower part **96.** In the cross-section of figure **8****,** the two lower parts **94, 96** are U-shaped and placed on top of one another. The base wall **97** of the outer lower part **96** constitutes a partition wall between the first duct **72** and the second duct **74** and has an upper face that forms an internal surface of the inlet branch **82** of the second duct **74** and a lower face that forms an internal surface of the first duct **72.** In the cross-section of figure **9****,** the cover **92** is U-shaped, the outer lower part **96** is divided in two channel sections **98,100** to form with the cover **92** the two parallel branches **84, 86** of the second duct **74.** The inner lower part **94** is located below and between the two channel sections **98, 100** to form the first duct **72** with the walls of the two channel sections **98, 100** and of the cover **92.** The cross-section of figure **10** is located downstream from the outlet **78** of the first duct **72** and shows the cover **92,** which closes the two U-shaped channels **98, 100** to form the parallel branches **84, 86.**

The impellers of the two fans **50, 52** are driven by the same fan motor **48,** thus the two impellers operate at the same rotation speed. The longer duct **74** is expected to have slightly more pressure losses. However, since the airflow rate varies as a function of the square root of the pressure, the airflow rate is substantially the same in the two ducts.

The arrangement of the air ducts **72, 74** is particularly space-efficient in the region of the brake unit **36** of the first wheel set **14** where the width of the ducting **70** has to be minimised to allow a pivoting movement of the running gear **10** about a vertical axis. The arrangement also takes advantage of the longitudinal channel **42** formed by the bolster subassembly **40.** Thanks to this arrangement, it is possible to keep the cooling inlets **62, 64** of the first traction motor and of the second traction motor close to the median vertical longitudinal plane **P2** of the running gear **10.**

While the above example illustrates a preferred embodiment of the present invention, various other arrangements can also be considered. In particular, the general shape of the ducting will vary with the position and orientation of the cooling inlets **62, 64** and fan outlet **58, 60.** The ducting **70** can be made of thin sheets of metal, plastic, or a composite material.

## Claims

1. A rail vehicle comprising a running gear (10) comprising a first wheel set (14), a second wheel set (16), a first traction motor (32) for driving the first wheel set (14), a second traction motor (34) for driving the second wheel set (14), the first traction motor (32) being provided with a first cooling inlet (62), the second traction motor (32) being provided with a second cooling inlet (64), wherein the rail vehicle comprises a traction motor cooling system comprising:
- a fan unit (46) comprising a first fan (50) provided with a first fan outlet (58), a second fan (52) provided with a second fan outlet (60), and
- a ducting (70) comprising a first duct (72) connecting the first fan outlet (58) with the first cooling inlet (62) and a second duct (74) for connecting the second fan outlet (60) with the second cooling inlet (64), the first duct (72) being provided with a first duct inlet (76) and a first duct outlet (78), the second duct (74) being provided with a second duct inlet (80) and a second duct outlet (90), wherein the first duct (72) and the second duct (74) are pneumatically independent from one another, the first duct inlet (76) is connected to the first fan outlet (58) and the second duct inlet (80) is connected to the second fan outlet (60),
**characterised in that** the second duct (74) has two parallel branches (84, 86) and an inlet branch (82) between the second duct inlet (80) and the two parallel branches (84, 86), a portion of the first duct (72) being located between the two parallel branches (84, 86).

2. The rail vehicle (70) of claim 1, wherein the first duct (72) is shorter than the second duct (74).

3. The rail vehicle of any one of the preceding claims, wherein the first duct outlet (78) is located between the two parallel branches (84, 86).

4. The rail vehicle of any one of the preceding claims, wherein the first duct inlet (76) and the second duct inlet (80) are spaced apart from one another, wherein, preferably the first duct inlet (76) and the second duct inlet (80) are located in a common plane and, most preferably, the first duct outlet (78) and the second duct outlet (90) lie on a straight line perpendicular to the common plane.

5. The rail vehicle of any one of the preceding claims, wherein the second duct (74) comprises an outlet branch (88) connected between the two parallel branches (84, 86) and the second duct outlet (90).

6. The rail vehicle of claim 5 wherein the outlet branch (88) is received in a channel element (42) of an underframe of the rail vehicle.

7. The rail vehicle of any one of the preceding claims, comprising a one-piece cover (92) comprising a first wall section forming a first inner wall surface of the first duct (72) and a second inner wall surface of the second duct (74), the first inner wall surface and the second inner wall surface facing a common direction.

8. The rail vehicle of any one of the preceding claims, comprising a partition wall (97) common to the first duct (72) and the second duct (74).

9. The rail vehicle of any one of the preceding claims, wherein the first fan (50) has a first fan inlet (54), the second fan (52) has a second fan inlet (56), the first and second fan inlets (54, 56) being separate.

10. The rail vehicle of any one of the preceding claims, wherein the fan unit (46) comprises a single motor (48) for driving the first fan (50) and the second fan (52).

11. The rail vehicle of any one of the preceding claims, wherein the first duct outlet (78) is connected to the first cooling inlet (62) by means of a first vertical flexible sleeve (66) and the second duct outlet (90) is connected to the second cooling inlet (64) by means of a second vertical flexible sleeve (68).

12. The rail vehicle of any one of the preceding claims, wherein the first cooling inlet (62) and the second cooling inlet (64) are aligned on a longitudinal axis (X) of the rail vehicle.

13. The rail vehicle of any one of the preceding claims, wherein the running gear (10) is provided with two secondary suspension elements located on two lateral sides of the running gear (10) in a median transverse vertical plane (P1) of the running gear, the first cooling inlet (62) and the second cooling inlet (64) being located on opposite sides of the median transverse vertical plane (P1) of the running gear (10).

14. The rail vehicle of any one of the preceding claims, wherein the ducting (70) is fixed to an underframe of a vehicle body of the rail vehicle.

15. The rail vehicle of any one of the preceding claims, wherein the fan unit (46) is fixed to an underframe of a vehicle body of the rail vehicle.

## Patentansprüche

1. Schienenfahrzeug, umfassend ein Fahrgestell (10), das einen ersten Radsatz (14), einen zweiten Radsatz (16), einen ersten Antriebsmotor (32) zum Antreiben des ersten Radsatzes (14), einen zweiten Antriebsmotor (34) zum Antreiben des zweiten Radsatzes (16) umfasst, wobei der erste Antriebsmotor (32) mit einem ersten Kühleinlass (62) versehen ist, wobei der zweite Antriebsmotor (34) mit einem zweiten Kühleinlass (64) versehen ist, wobei das Schienenfahrzeug ein Antriebsmotor-Kühlsystem umfasst, das umfasst:
- eine Lüftereinheit (46), die einen ersten Lüfter (50) umfasst, der mit einem ersten Lüfterauslass (58) versehen ist, und einen zweiten Lüfter (52), der mit einem zweiten Lüfterauslass (60) versehen ist; und
- eine Kanalisation (70), die eine erste Leitung (72) umfasst, die den ersten Lüfterauslass (58) mit dem ersten Kühleinlass (62) verbindet, und eine zweite Leitung (74), um den zweiten Lüfterauslass (60) mit dem zweiten Kühleinlass (64) zu verbinden, wobei die erste Leitung (72) mit einem ersten Leitungseinlass (76) und mit einem ersten Leitungsauslass (78) versehen ist, wobei die zweite Leitung (74) mit einem zweiten Leitungseinlass (80) und mit einem zweiten Leitungsauslass (90) versehen ist, wobei die erste Leitung (72) und die zweite Leitung (74) pneumatisch unabhängig voneinander sind, wobei der erste Leitungseinlass (76) mit dem ersten Lüfterauslass (58) verbunden ist und der zweite Leitungseinlass (80) mit dem zweiten Lüfterauslass (60) verbunden ist,
**dadurch gekennzeichnet, dass** die zweite Leitung (74) zwei parallele Schenkel (84, 86) und einen Einlassschenkel (82) zwischen dem zweiten Leitungseinlass (80) und den zwei parallelen Schenkeln (84, 86) aufweist, wobei ein Abschnitt der ersten Leitung (72) zwischen den zwei parallelen Schenkeln (84, 86) lokalisiert ist.

2. Schienenfahrzeug nach Anspruch 1, wobei die erste Leitung (72) kürzer als die zweite Leitung (74) ist.

3. Schienenfahrzeug nach einem der vorangehenden Ansprüche, wobei der erste Leitungsauslass (78) zwischen den zwei parallelen Schenkeln (84, 86) lokalisiert ist.

4. Schienenfahrzeug nach einem der vorangehenden Ansprüche, wobei der erste Leitungseinlass (76) und der zweite Leitungseinlass (80) voneinander beabstandet sind, wobei vorzugsweise der erste Leitungseinlass (76) und der zweite Leitungseinlass (80) in einer gemeinsamen Ebene lokalisiert sind und sich in besonders bevorzugter Weise der erste Leitungsauslass (78) und der zweite Leitungsauslass (90) auf einer geraden Linie befinden, die senkrecht zu der gemeinsamen Ebene ist.

5. Schienenfahrzeug nach einem der vorangehenden Ansprüche, wobei die zweite Leitung (74) einen Auslassschenkel (88) umfasst, der zwischen den zwei parallelen Schenkeln (84, 86) und dem zweiten Leitungsauslass (90) verbunden ist.

6. Schienenfahrzeug nach Anspruch 5, wobei der Auslassschenkel (88) in einem Kanalelement (42) eines Untergestells des Schienenfahrzeugs aufgenommen ist.

7. Schienenfahrzeug nach einem der vorangehenden Ansprüche, umfassend ein einteiliges Abdeckmittel (92), das einen ersten Wandabschnitt umfasst, der eine erste innere Wandfläche der ersten Leitung (72) und eine zweite innere Wandfläche der zweiten Leitung (74) bildet, wobei die erste innere Wandfläche und die zweite innere Wandfläche einer gemeinsamen Richtung gegenüberliegen.

8. Schienenfahrzeug nach einem der vorangehenden Ansprüche, umfassend eine Trennwand (97), die der ersten Leitung (72) und der zweiten Leitung (74) gemeinsam ist.

9. Schienenfahrzeug nach einem der vorangehenden Ansprüche, wobei der erste Lüfter (50) einen ersten Lüftereinlass (54) aufweist, der zweite Lüfter (52) einen zweiten Lüftereinlass (56) aufweist, wobei der erste und der zweite Lüftereinlass (54, 56) getrennt sind.

10. Schienenfahrzeug nach einem der vorangehenden Ansprüche, wobei die Lüftereinheit (46) einen einzigen Motor (48) umfasst, um den ersten Lüfter (50) und den zweiten Lüfter (52) anzutreiben.

11. Schienenfahrzeug nach einem der vorangehenden Ansprüche, wobei der erste Leitungsauslass (78) mit dem ersten Kühleinlass (62) mittels eines ersten vertikalen flexiblen Mantels (66) verbunden ist und der zweite Leitungsauslass (90) mit dem zweiten Kühleinlass (64) mittels eines zweiten vertikalen flexiblen Mantels (68) verbunden ist.

12. Schienenfahrzeug nach einem der vorangehenden Ansprüche, wobei der erste Kühleinlass (62) und der zweite Kühleinlass (64) auf einer Längsachse (X) des Schienenfahrzeugs fluchten.

13. Schienenfahrzeug nach einem der vorangehenden Ansprüche, wobei das Fahrgestell (10) mit zwei sekundären Aufhängungselementen versehen ist, die auf zwei seitlichen Seiten des Fahrgestells (10) in einer transversalen vertikalen Mittelebene (P1) des Fahrgestells lokalisiert sind, wobei der erste Kühleinlass (62) und der zweite Kühleinlass (64) auf gegenüberliegenden Seiten der transversalen vertikalen Mittelebene (P1) des Fahrgestells (10) lokalisiert sind.

14. Schienenfahrzeug nach einem der vorangehenden Ansprüche, wobei die Kanalisation (70) auf einem Untergestell eines Körpers befestigt ist, der eine Fahrzeugkarosserie des Schienenfahrzeugs bildet.

15. Schienenfahrzeug nach einem der vorangehenden Ansprüche, wobei die Lüftereinheit (46) auf einem Untergestell einer Fahrzeugkarosserie des Schienenfahrzeugs bildet.

## Revendications

1. Véhicule ferroviaire comprenant un train de roulement (10) qui comprend un premier essieu monté (14), un second essieu monté (16), un premier moteur de traction (32) pour entraîner le premier essieu monté (14), un second moteur de traction (34) pour entraîner le second essieu monté (16), le premier moteur de traction (32) étant muni d'une première entrée de refroidissement (62), le second moteur de traction (34) étant muni d'une seconde entrée de refroidissement (64), dans lequel le véhicule ferroviaire comprend un système de refroidissement de moteur de traction qui comprend :
- une unité de ventilation (46) qui comprend un premier ventilateur (50) qui est muni d'une première sortie de ventilateur (58) et un second ventilateur (52) qui est muni d'une seconde sortie de ventilateur (60) ; et
- une canalisation (70) qui comprend un premier conduit (72) qui connecte la première sortie de ventilateur (58) avec la première entrée de refroidissement (62) et un second conduit (74) pour connecter la seconde sortie de ventilateur (60) avec la seconde entrée de refroidissement (64), le premier conduit (72) étant muni d'une première entrée de conduit (76) et d'une première sortie de conduit (78), le second conduit (74) étant muni d'une seconde entrée de conduit (80) et d'une seconde sortie de conduit (90), dans lequel le premier conduit (72) et le second conduit (74) sont pneumatiquement indépendants l'un de l'autre, la première entrée de conduit (76) est connectée à la première sortie de ventilateur (58) et la seconde entrée de conduit (80) est connectée à la seconde sortie de ventilateur (60),
**caractérisé en ce que** le second conduit (74) comporte deux branches parallèles (84, 86) et une branche d'entrée (82) entre la seconde entrée de conduit (80) et les deux branches parallèles (84, 86), une section du premier conduit (72) étant localisée entre les deux branches parallèles (84, 86).

2. Véhicule ferroviaire selon la revendication 1, dans lequel premier conduit (72) est plus court que le second conduit (74).

3. Véhicule ferroviaire selon l'une quelconque des revendications précédentes, dans lequel la première sortie de conduit (78) est localisée entre les deux branches parallèles (84, 86).

4. Véhicule ferroviaire selon l'une quelconque des revendications précédentes, dans lequel la première entrée de conduit (76) et la seconde entrée de conduit (80) sont espacées l'une de l'autre, dans lequel, de préférence, la première entrée de conduit (76) et la seconde entrée de conduit (80) sont localisées dans un plan commun et de la façon la plus préférable, la première sortie de conduit (78) et la seconde sortie de conduit (90) sont situées sur une ligne droite qui est perpendiculaire au plan commun.

5. Véhicule ferroviaire selon l'une quelconque des revendications précédentes, dans lequel le second conduit (74) comprend une branche de sortie (88) qui est connectée entre les deux branches parallèles (84, 86) et la seconde sortie de conduit (90).

6. Véhicule ferroviaire selon la revendication 5, dans lequel la branche de sortie (88) est reçue dans un élément de canal (42) d'un châssis de base du véhicule ferroviaire.

7. Véhicule ferroviaire selon l'une quelconque des revendications précédentes, comprenant un moyen de recouvrement monopièce (92) qui comprend une première section de paroi qui forme une première surface de paroi interne du premier conduit (72) et une seconde surface de paroi interne du second conduit (74), la première surface de paroi interne et la seconde surface de paroi interne faisant face à une direction commune.

8. Véhicule ferroviaire selon l'une quelconque des revendications précédentes, comprenant une paroi de partition (97) qui est commune au premier conduit (72) et au second conduit (74).

9. Véhicule ferroviaire selon l'une quelconque des revendications précédentes, dans lequel le premier ventilateur (50) comporte une première entrée de ventilateur (54), le second ventilateur (52) comporte une seconde entrée de ventilateur (56), les première et seconde entrées de ventilateur (54, 56) étant séparées.

10. Véhicule ferroviaire selon l'une quelconque des revendications précédentes, dans lequel l'unité de ventilation (46) comprend un unique moteur (48) pour entraîner le premier ventilateur (50) et le second ventilateur (52).

11. Véhicule ferroviaire selon l'une quelconque des revendications précédentes, dans lequel la première sortie de conduit (78) est connectée à la première entrée de refroidissement (62) au moyen d'une première gaine souple verticale (66) et la seconde sortie de conduit (90) est connectée à la seconde entrée de refroidissement (64) au moyen d'une seconde gaine souple verticale (68).

12. Véhicule ferroviaire selon l'une quelconque des revendications précédentes, dans lequel la première entrée de refroidissement (62) et la seconde entrée de refroidissement (64) sont alignées sur un axe longitudinal (X) du véhicule ferroviaire.

13. Véhicule ferroviaire selon l'une quelconque des revendications précédentes, dans lequel le train de roulement (10) est muni de deux éléments de suspension secondaires qui sont localisés sur deux côtés latéraux du train de roulement (10) dans un plan vertical transversal médian (P1) du train de roulement, la première entrée de refroidissement (62) et la seconde entrée de refroidissement (64) étant localisées sur des côtés opposés du plan vertical transversal médian (P1) du train de roulement (10).

14. Véhicule ferroviaire selon l'une quelconque des revendications précédentes, dans lequel la canalisation (70) est fixée sur un châssis de base d'un corps formant carrosserie de véhicule du véhicule ferroviaire.

15. Véhicule ferroviaire selon l'une quelconque des revendications précédentes, dans lequel l'unité de ventilation (46) est fixée sur un châssis de base d'une carrosserie de véhicule du véhicule ferroviaire.
